# EUROPÄISCHE PATENTSCHRIFT

(11) **EP 1 874 447 B1**
(45) Veröffentlichungstag und Bekanntmachung des Hinweises auf die Patenterteilung: **28.04.2010**
(21) Anmeldenummer: 06742680.9
(22) Anmeldetag: 25.04.2006
(51) Int. Cl.: B01F 7/16, F16D 3/04, F16D 1/10, B02C 18/10, B02C 18/12, B02C 18/24, G01N 1/28

(54) **DISPERGIERVORRICHTUNG**
DISPERSING DEVICE
DISPOSITIF DE DISPERSION

(30) Priorität: 29.04.2005 DE 102005020460
(43) Veröffentlichungstag der Anmeldung: 09.01.2008
(73) Patentinhaber: IKA - Werke GmbH & Co. KG, 79219 Staufen (DE)
(72) Erfinder: JÄGLE, Peter, 79282 Ballrechten-Dottingen (DE)
(74) Vertreter: Maucher, Wolfgang
(86) Internationale Anmeldenummer: PCT/EP2006/003801
(87) Internationale Veröffentlichungsnummer: WO 2006/117098

(56) Entgegenhaltungen:
- EP-A- 0 409 039
- WO-A-2004/035191
- FR-A- 2 289 094
- PATENT ABSTRACTS OF JAPAN Bd. 010, Nr. 004 (C-322), 9. Januar 1986 (1986-01-09) & JP 60 166024 A (TOA NENRYO KOGYO KK), 29. August 1985 (1985-08-29)

## Beschreibung

Die Erfindung betrifft eine Rühr- oder Dispergiervorrichtung mit einem hermetisch abgeschlossenen Mischraum, einem in diesem Mischraum um eine zentrale Achse antreibbaren Rühr- oder Dispergierwerkzeug mit einem stabförmigen Element zur Kraftübertragung eines Antriebs auf dieses Werkzeug und mit einem außerhalb des Mischraums befindlichen derartigen Antrieb.

Es sind bereits Dispergiervorrichtungen, welche dem Aufschluss von Substanzen, deren Zerkleinern oder eben dem Dispergieren dienen, in unterschiedlicher Form bekannt, bei welchen als stabförmiges Übertragungselement für den Antrieb eines Antriebsmotors auf das Werkzeug in der Regel eine Welle vorgesehen ist, die durch eine Wandung, beispielsweise den Boden oder auch den Deckel des Mischraumes hindurchführt und mit dem im Inneren des Mischraumes befindlichen Werkzeug verbunden ist.

Das betreffende Dispergierwerkzeug wird demnach also dadurch angetrieben, dass die Drehbewegung der erwähnten Welle auf das Werkzeug übertragen wird.

Dabei muss jedoch diese Antriebsachse oder -welle durch die Wandung des Mischraumes hindurchgeführt und dort um so besser abgedichtet werden, je weniger von dem Inhalt des Mischraumes nach außen austreten soll oder darf. Besonders kritisch ist dabei die Bearbeitung von giftigen oder kontaminierten Mischgütern, wie sie beispielsweise auch in der Medizin, etwa in der Form von Gewebe oder dergleichen, vorkommen.

Bei den üblichen Dichteinrichtungen ist aber nicht auszuschließen, dass zumindest nach einer gewissen Laufzeit entsprechende Dichtringe oder andere Dichtmittel soweit verschlissen werden, dass eventuell geringe und kaum spürbare Mengen des Mischguts durch sie hindurchtreten können, die bei hoher Giftigkeit jedoch entweder, für den Benutzer direkt schädlich sind oder durch die Kontamination der Umgebung für einen entsprechend hohen, dem eigentlichen Rühr-, Misch- bzw. Dispergierprozess nachgelagerten Arbeitsaufwand sorgen.

Dokument EP-A-0 409 039 offenbart eine Dispergiervorrichtung gemäß dem Oberbegriff des Anspruchs 1.

Es besteht deshalb die Aufgabe, eine Dispergiervorrichtung der eingangs definierten Art zu schaffen, bei welcher bei guter Dispergierleistung ein Austritt von Mischgut im Bereich des Antriebes ausgeschlossen ist.

Diese Aufgabe wird gelöst durch eine Dispergiervorrichtung gemäß Anspruch 1.

Auf diese Weise kann die Drehbewegung des Antriebs durch das taumelnde, stabförmige Element mittels der Membrane ohne eine an dem Mischraum befindliche, gedichtete Durchführung übertragen werden und trotzdem das Dispergierwerkzeug mit einer zu der zentralen Mittelachse des Mischraums koaxialen Drehachse angeordnet sein, weswegen sich diese Dispergiervorrichtung für hohe Drehzahlen eignet und mit ihr daher ein sehr gutes Dispergierergebnis erreicht werden kann. Die Anordnung des Dispergierwerkzeugs mit einer zu der zentralen Mittelachse des Mischraums koaxialen Drehachse wird durch den Umstand ermöglicht, dass das stabförmige Element exzentrisch an dem Dispergierwerkzeug angreift und dabei in eine Aussparung des rotierbaren Elements in Gebrauchsstellung eingreift. Hierbei ermöglicht die Membrane in ihrer Auslenkung die Bewegung des stabförmigen Elements bzw. von dessen zu beiden Seiten der Membran angeordneten Enden, weswegen Dichtungsringe oder dergleichen Dichtelemente im Bereich des Eintritts dieses stabförmigen Elements in den Mischraum nicht erforderlich sind und daher auch nicht undicht werden können. Vielmehr ergibt sich trotz Eintritts eines Antriebselements ein hermetisch dichter Mischraum, in welchem dennoch das Werkzeug mittels dieses Antriebselements mechanisch in Drehung versetzt werden kann und der Eingriff des stabförmigen Elements an dem Werkzeug führt zu einer ungehinderten Rotation von dessen rotierbaren Teil, also des Rotors, so dass das Mischgut optimal aufbereitet werden kann.

Weiterhin sind an der erfindungsgemäßen Dispergiervorrichtung auch die zentrale Mittelachse des Werkzeugs und des Antriebs koaxial und miteinander fluchtend angeordnet, während das stabförmige Element relativ zu diesen in Gebrauchsstellung schräg angeordnet ist. Die entgegengesetzten Enden des stabförmigen Elements greifen an entgegengesetzten exzentrischen Stellen einerseits des Antriebs und andererseits des rotierbaren Teils des Werkzeugs an, wodurch die Drehbewegung des Antriebs zunächst, durch die Flexibilität der Membrane, in eine Taumelbewegung des stabförmigen Elements und sodann wiederum in eine Drehbewegung des rotierbaren Teils des Werkzeugs umgesetzt und hierdurch bei gleichzeitiger hermetischer Abdichtung des Mischraums übertragen wird.

Aus dem Stand der Technik sind zwar bereits Rühr- oder Mischvorrichtungen, bspw. aus der DE-A-1557186 oder der DE-A-2440079, bekannt, bei denen stabförmige Elemente beim Eintritt in einen Mischraum mit einer Membrane verbunden sind und jeweils das stabförmige Element bei der Übertragung der Kraft eines mit ihnen verbundenen Antriebs eine taumelnde Bewegung ausführt. Bei diesen Vorrichtungen ist jedoch das Rühr- und Mischwerkzeug mit dem stabförmigen Element verbunden, so dass es die Taumelbewegung des stabförmigen Elements mitmachen muss. Hierdurch sind diese Vorrichtungen zum Dispergieren ungeeignet, denn die Taumelbewegung des Werkzeugs führt dazu, dass diese Vorrichtungen nur mit langsamen Drehzahlen betrieben werden können, also das betreffende Gut allenfalls Rühren oder Mischen können. Außerdem können bei der Kraftübertragung mit diesen Vorrichtungen Unwuchten auftreten und die Vorrichtungen haben darüber hinaus durch das taumelnd umlaufende Werkzeug einen großen Platzbedarf. Die Erfindung ermöglicht demgegenüber durch zentrale Anordnung des Werkzeugs eine schlanke Form des Mischraums und eines diesen enthaltenden Behälters.

Eine gute Übertragung der Drehbewegung des Antriebs lässt sich bei einer Weiterbildung der erfindungsgemäßen Dispergiervorrichtung dadurch erreichen, dass das stabförmige Element lose in die Aussparung des rotierbaren Elements eingreift, ein Wandungsstück, einen Flügel oder Schenkel oder dergleichen Bereich dieses Rotors mitnimmt und dieser derart gegenüber dem als Kranz ausgebildeten Stator des Werkzeugs in Drehbewegung versetzt wird. Die antriebsseitige Drehbewegung wird also durch die Taumelbewegung des stabförmigen Elements vermittelt, welches an seinem werkzeugseitigen Ende exzentrisch mit dem Werkzeug in einem unbefestigten, losen Eingriff steht.

Zweckmäßigerweise wird das stabförmige Element, welches zu beiden Seiten der Membrane angeordnet ist, bei einer weiteren Ausgestaltung der Dispergiervorrichtung von der Membrane getragen. Es ist demnach keine aufwendige Kupplung erforderlich, da der Stab von der Membrane gehalten und durch Eingriff positioniert ist.

Die angestrebte Übertragung der Drehbewegung lässt sich bei einer weiteren Ausgestaltung der Dispergiervorrichtung besonders einfach realisieren, bei der das stabförmige Element mit seinem dem Antrieb zugewandten Ende lose in einen exzentrischen Bereich des rotierenden Teils des Antriebs eingreift, da die Taumelbewegung des stabförmigen Elementes in diesem Fall über die Mitnahme desselben durch ein dafür an dem Antrieb vorgesehenes Mittel geschieht. Dadurch, dass das stabförmige Element von der Membrane gehalten ist, kann dieses an seinen beiden Enden jeweils in unbefestigtem, losem Eingriff mit den drehbeweglichen Teilen des Antriebs einerseits und des Dispergierwerkzeugs andererseits stehen.

Eine bevorzugte Weiterbildung der Dispergiervorrichtung kann daher darin bestehen, dass der Antrieb einen Querstift aufweist, welcher um seine mit der Antriebsachse koaxialen Querachse rotiert. Der Querstift liegt hierbei an dem antriebsseitigen Ende des stabförmigen Elements an und versetzt derart das stabförmige Element in die Taumelbewegung. Bei der Drehbewegung des Antriebs hält der Querstift das Ende des stabförmigen Elements in dessen exzentrischer Lage und versetzt das stabförmige Element in die Taumelbewegung.

Besonders zweckmäßig ist bei einer Ausbildung der Dispergiervorrichtung das stabförmige Element mit der Membrane einstückig ausgebildet. Es sind aber auch andere zweckmäßige Weiterbildungen der Verbindung des stabförmigen Elements mit der Membrane als Teil einer Wandung des Mischraums denkbar. Beispielsweise kann diese Verbindung zwischen Stab und Membrane durch chemische Reaktion der die beiden Teile bildenden Werkstoffe hermetisch dicht und kraftübertragend ausgebildet sein.

In Frage kommt aber auch eine Weiterbildung, bei der die beiden Teile durch Zweikomponentenspritzverfahren eine einstückige Verbindung eingehen. Darüber hinaus ist es aber auch denkbar, die Membrane mit dem Stab zu verkleben oder den Stab zweiteilig mit Flanschen zu versehen, welche beidseits mit der Membrane verklebt, verschweißt oder chemisch verbunden sind. Alle vorgenannten Maßnahme sind jedenfalls geeignet, die hermetische Dichtigkeit der Membrane sicherzustellen. Daneben ist im übrigen auch eine mit entsprechend hoher Klemmkraft dichte Klemmverbindung zwischen dem stabförmigen Element und der Membrane möglich.

Eine andere vorteilhafte Ausgestaltung stellt eine Dispergiervorrichtung dar, bei der das stabförmige Element mehrteilig, vorzugsweise jeweils einteilig zu beiden Seiten der Membrane ausgebildet ist. Für eine solche Ausgestaltung können dann etwa stabförmige Elemente unterschiedlichen Längenmaßes vorgesehen sein, die nachträglich an der Membrane anordenbar sind, so dass Mischräume unterschiedlicher Längserstreckung und damit auch unterschiedlicher Volumina bei gegebenenfalls unverändertem Querschnitt realisierbar sind.

Besonders preiswerte Lösungen der erfindungsgemäßen Dispergiervorrichtung ergeben sich, wenn das stabförmige Element geradlinig ausgebildet ist bzw. verläuft und bei einer Weiterbildung das dem Werkzeug zugewandte, gegenüber der Durchmesserebene des Dispergierwerkzeugs geradlinige Ende des stabförmigen Elements mit Spiel in eine hierfür vorgesehene, genügend große Öffnung des Werkzeugs eingreift. Insbesondere bei für nur eine begrenzte Zeit anwendbaren derartige Vorrichtungen, die im Extremfall sogar nur für den Einmalgebrauch als Wegwerfvorrichtung vorgesehen sein können, reicht eine derartige Kraftübertragung völlig aus, weil die Anwendungszeit zu kurz ist, als dass es zu einem nennenswerten Verschleiß kommen könnte.

Eine zweckmäßige Weiterbildung stellt eine Dispergiervorrichtung dar, bei der die Drehachse des Werkzeugs vertikal angeordnet ist und das stabförmige Element schräg von unten nach oben oder von oben nach unten in das Werkzeug eingreift, da hierdurch die einfache Beschickung der Vorrichtung erleichtert wird, die Schwerkraft ausgenutzt werden kann, und eine schnelle, sichere und aufrechte Positionierung an einem Antrieb möglich ist.

Besonders vorteilhaft kann in einer anderen Ausführung der Dispergiervorrichtung dabei das Werkzeug an mindestens einem Randabsatz innerhalb des Mischraums lösbar aufgelagert sein, wobei die lösbare Auflagerung dazu führt, dass das Werkzeug von dem Absatz abhebbar und auswechselbar ist. Hierdurch ist es möglich, statt des Dispergierwerkzeugs oder aber im Einzelfall auch gar kein Werkzeug zu verwenden und in diesem Fall den durch das stabförmige Element gebildeten Antriebsstab als Misch- bzw. Rührstab zu benutzen.

Um trotzdem das aus dem Stator und dem Rotor, also dem äußeren Kranz und dem rotierbaren Element gebildete Werkzeug in allen möglichen Anordnungen der Dispergiervorrichtung sicher an seinem Platz zu halten und so zuverlässige Ergebnisse des Dispergierprozesses zu ermöglichen, kann bei einer anderen Ausbildung vorgesehen sein, dass der äußere, feststehende Kranz des Werkzeugs durch Befestigung, Klemmung, Klebung oder Formschluss an der Innenseite der Wandung des Mischraums dreh- und verschiebungsfest gehalten ist.

Vorteilhafterweise kann bei einer anderen Ausführungsform der Dispergiervorrichtung an dem Mischraum ein lösbarer Deckel vorgesehen sein, der zum Einfüllen des Mischgutes und auch zum Auswechseln des Werkzeugs lösbar ist. Der Deckel muß dabei nicht notwendigerweise vollständig entfernt werden, sondern kann, um nicht verloren zu werden, mit irgend einer Art zusätzlicher Verbindung, beispielsweise mit der Außenwand des Mischraums, oder dergleichen Verliersicherung versehen werden.

Insbesondere der Deckel, aber auch eine andere Wandung des Mischraums der Dispergiervorrichtung, kann eine durchstechbare Membrane enthalten, durch welche mit Hilfe einer Kanüle und einer Spritze das Mischgut oder zuzusetzende bzw. einzumischende Bestandteile in dem Mischraum eingetragen werden oder auch entnommen können. Besonders bevorzugt gerade in dem Fall, dass die Vorrichtung tatsächlich nur eine einmalige Verwendung findet und danach einer Entsorgung zugeführt wird und beispielsweise lediglich eine Entnahme per Kanüle erfolgt, kann dabei bereits die das stabförmige Element tragende Membran als durchstechbare Membran vorgesehen sein, so dass auf die Anordnung einer weiteren Membrane verzichtet werden kann. Auch das gleichzeitige Vorsehen mehrerer Membranen als durchstechbare Membranen ist natürlich möglich.

Bei einer besonders zweckmäßigen Ausbildung der Dispergiervorrichtung ist der Rotor des Werkzeugs ,also das rotierbare Element des Werkzeugs, aus mindestens zwei voneinander lösbaren Teilen ausgebildet, welche in Gebrauchsstellung drehfest verbunden sind, so dass der Eingriff des das rotierende Teil antreibenden stabförmigen Elements nicht an dem Werkzeugabschnitt, sondern einem dem Antrieb zugewandten, separaten Abschnitt des rotierenden Elements erfolgt, der dann auch individuell gestaltbar und separat austauschbar ist.

Vor allem bei einem Mischbehälter oder Mischraum, dessen Querschnitt von einem Homogenisier- oder Dispergierwerkzeug völlig ausgefüllt ist, ist es zweckmäßig, wenn zumindest bereichsweise an der achsparallelen Wandung Vorsprünge, Rippen oder dergleichen strömungsbrechende Einrichtungen vorgesehen sind, die in zweckmäßiger Weise gleichzeitig zur Festlegung des feststehenden Kranzes des Werkzeugs entgegen der Drehbewegung dienen und hierfür mit mindestens einem Bereich des Werkzeugs, zum Beispiel mit dafür vorgesehenen Nuten an dem Kranz, in Eingriff stehen.

Sowohl hinsichtlich einer einfachen und kostengünstigen Herstellung als auch hinsichtlich der Vermeidung von Aufwand bezüglich Reinigung und Dekontamination ist eine Ausführungsform des erfindungsgemäßen Dispergierwerkzeugs, bei welcher dessen Körper (9) und/oder das Werkzeug (2) und/oder der Deckel (8) und/oder das stabförmige Element (3) und/oder die Membrane (6) als Einmalartikel insbesondere aus einem Kunststoffmaterial ausgebildet sind.

Die Erfindung wird nachstehend anhand von Ausführungsbeispielen in der Zeichnung näher erläutert. Es zeigen
- Fig.1: eine erste Ausführungsform einer Dispergiervorrichtung in Explosionsdarstellung;
- Fig.2: einen Längsschnitt einer Seitenansicht der Dispergiervorrichtung aus Fig.1 in zusammengesetztem Zustand und in vertikaler Stellung mit Antrieb von unten;
- Fig.3: einen Längsschnitt einer Seitenansicht einer anderen Ausführungsform der Dispergiervorrichtung, nämlich mit oben angeordnetem Antrieb;
- Fig.4,5: zwei stirnseitige Ansichten des Querschnitts eines Dispergiereinsatzes des Werkzeugs der Dispergiervorrichtung.

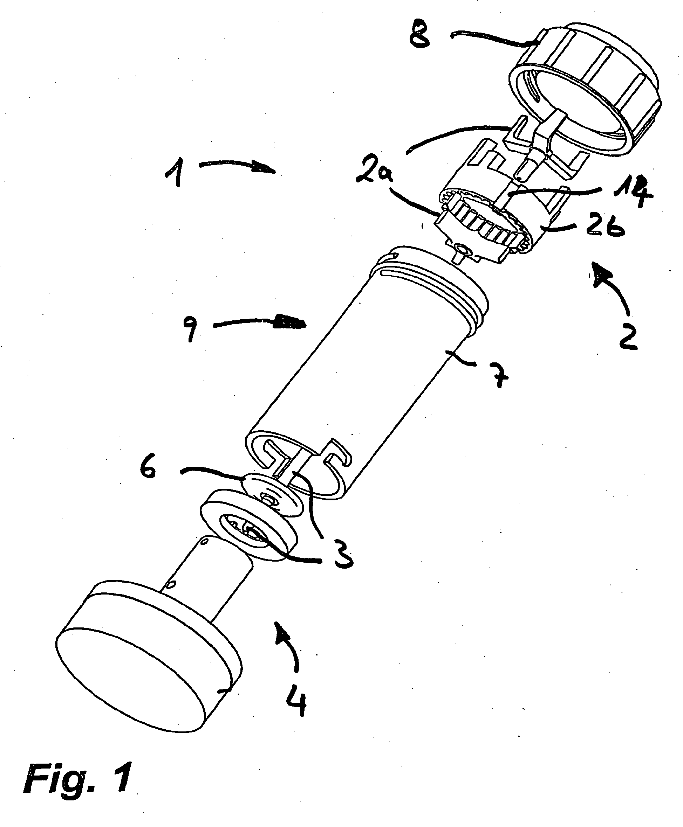

Die Fig.1 zeigt eine im Ganzen mit 1 bezeichnete Dispergiervorrichtung mit einem im wesentlichen zylindrischen, röhrenförmigen Körper 9 in dessen Inneren ein hier nicht sichtbarer, hermetisch abgeschlossener Mischraum 5 gebildet wird. In diesem Mischraum 5 befindet sich ein um eine zentrale Achse antreibbares Dispergierwerkzeug 2, an welches mittels eines stabförmigen Elements 3 die Kraft eines Antriebs 4 übertragen wird. Der Antrieb 4 mit Kupplung befindet sich außerhalb des Mischraums 5 am unteren Ende der Dispergiervorrichtung 1, welche auf den Antrieb 4 aufsteckbar und in diesem Bereich durch Festlegehilfen in Form von Bajonettverschlüssen an dem Körper 9 der Dispergiervorrichtung 1 festlegbar ist.

Ebenfalls in der Fig.1 zu erkennen ist ein stabförmiges Element 3, welches mit einer Membrane 6 verbunden ist. Das stabförmige Element 3 wird zusammen mit der Membrane 6 am Eintritt in den Mischraum 5 durch ein ringförmiges Verschlussstück 15 festgelegt, so dass die Membrane 6 einen Teil der Wandung 7 des Mischraums 5 bildet, dessen übriger Teil durch die Wände des zylindrischen Körpers und den an dessen dem Antrieb 4 abgewandten Ende befindlichen Deckel 8 gebildet sind. Durch den Antrieb 4 ist das stabförmige Element 3 in eine taumelnde Bewegung versetzbar, sein in dem Mischraum 5 befindliches Ende führt dann eine kreisende Bewegung aus, wobei die Membrane 6 diese Bewegung in einer sie in gewisser Weise verformenden Walkbewegung mit vollzieht und wobei dieses in dem Mischraum 5 befindliche Ende des stabförmigen Elements 3 in dem Mischraum 5 an dem Dispergierwerkzeug 2 exzentrisch zu dessen Rotationsachse angreift.

Durch den exzentrischen Angriff wird das rotierende Element 2a des Dispergierwerkzeugs 2 in eine Kreisbewegung versetzt und ist dann in der Lage, in dem Mischraum 5 befindliches Gut dadurch zu dispergieren, dass Schneiden oder Zähne des rotierenden Teils 2a des Dispergierwerkzeugs 2 an ebensolchen Scheiden oder Zähnen des statischen Teils 2b in Form eines Kranzes während der Rotation vorbeigeführt werden. Das rotierende Teil 2a des Dispergierwerkzeugs 2 ist dabei aus zwei mehrflügeligen Stücken aufgebaut, welche in Gebrauchsstellung drehfest verbunden sind. An dem Stück auf der dem Antrieb 4 zugewandten Seite greift das stabförmige Element 3 durch Eingriff in die Aussparung 16 an, während an dem anderen Stück Schneiden angeordnet sind.

Das Werkzeug weist also einen äußeren, feststehenden Kranz 2b mit Zähnen und/oder Schneiden oder dergleichen und ein demgegenüber koaxial angeordnetes, rotierbares Element 2a ebenfalls mit Zähnen und/oder Schneiden oder dergleichen auf, wobei das in dem Mischraum befindliche Ende des stabförmigen Elements 3 in Gebrauchsstellung an dem Dispergierwerkzeug 2 exzentrisch zu dessen Rotationsachse angreift das stabförmige Element 3 in eine Aussparung 16 des rotierbaren Elements 2a in Gebrauchsstellung eingreift.

Die Drehbewegung des Antriebs 4 wird demnach dadurch in eine Drehbewegung des rotierbaren Teils 2a umgesetzt und durch das stabförmige Element 3 übertragen, dass die entgegengesetzten Enden des stabförmigen Elements 3 an entgegengesetzten exzentrischen Stellen einerseits des Antriebs 4 und andererseits des rotierbaren Teils 2a des Werkzeugs 2 angreifen. Hierdurch wird die Drehbewegung des Antriebs 4 zunächst, durch die Flexibilität der Membrane 6, in eine Taumelbewegung des stabförmigen Elements 3 und sodann wiederum in eine Drehbewegung des rotierbaren Teils 2a des Werkzeugs 2 umgesetzt und hierdurch bei gleichzeitiger hermetischer Abdichtung des Mischraums 5 übertragen.

Zum Verschluss des zylindrischen Körpers 9 und damit auch des Mischraums 5 ist, wie schon erwähnt, ein Deckel 8 mit einer durchstechbaren Membrane vorgesehen, welcher mit Hilfe eines an der Außenseite des Körpers 9 befindlichen Gewindes an dem dem Antrieb abgewandten Ende des Körpers 9 angebracht werden kann.

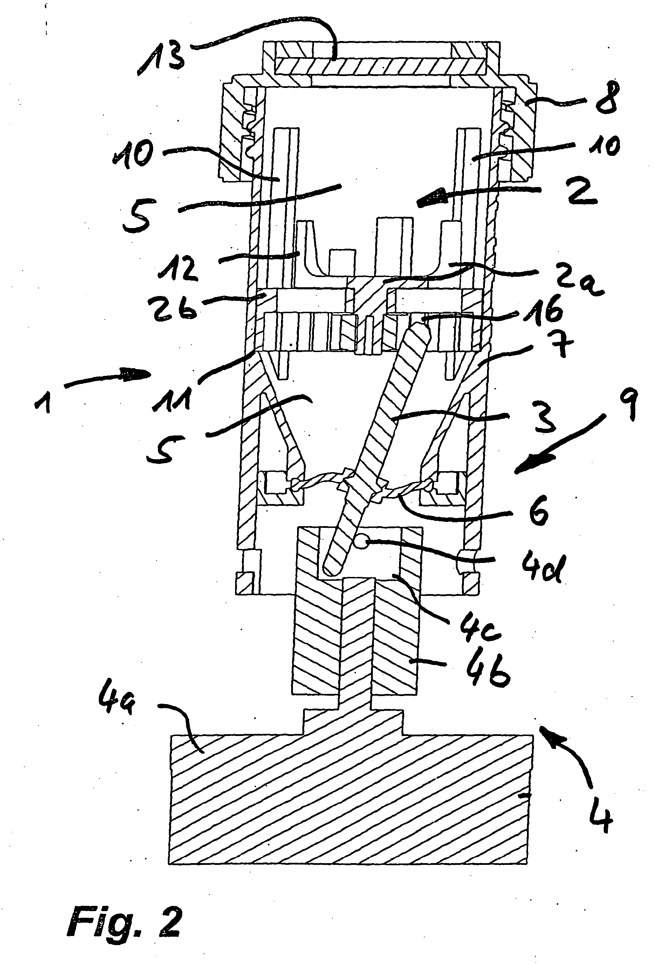

In der Fig.2 ist die Dispergiervorrichtung 1 in zusammengesetztem Zustand auf den Antrieb 4 aufgesetzt zu erkennen. Der Antrieb 4 weist dabei einen Motor 4a mit axial auf der Motorwelle befestigter Kupplung 4b auf, welcher das stabförmige Element 3, das mit der Membrane 6 eine Einheit bildet, durch eine Rotationsbewegung antreibt. Dies geschieht dadurch, dass das dem Antrieb 4 zugewandte Ende des stabförmigen Elements 3 in einen Raum 4c der Kupplung 4b eingreift, wo es von einem zur Drehachse des Antriebs senkrechten Stift 4d mitgenommen wird, der an der Oberfläche des stabförmigen Elements 3 anliegt. Die Position dieses Stifts 4d und dessen Durchmesser bestimmen den Durchmesser der Kreisbewegung der Enden des stabförmigen Elements 3 bzw. dessen Winkel zur Antriebsachse.

Angetrieben führen die Enden des stabförmigen Elements 3, gelagert durch die Membrane 6, eine Kreisbewegung durch, so dass an dem dem Antrieb abgewandten Ende des stabförmigen Elements 3 wiederum das Dispergierwerkzeug 2 angetrieben wird. Auch zu erkennen ist, dass das stabförmige Element 3 von der Membrane 6 gehalten ist, was den beidseitigen unbefestigten, losen Eingriff an dem rotierenden Teil des Antriebs 4 bzw. dem rotierbaren Teil 2a des Werkzeugs 2 gestattet. Die in der Fig.2 ebenfalls zu erkennende Auslenkung der Membrane 6 als Folge der Kreisbewegung der Enden des taumelnden stabförmigen Elements 3, verdeutlicht, dass diese während des Betriebs einer Walkarbeit unterworfen ist, welche eben diese Auslenkung bzw. Verformung verursacht. Die Membrane 6 ist dabei am Innenrand der Wandung 7 und bezüglich des freien Endes der konisch in den Mischraum 5 auslaufenden, wandartigen Begrenzung des Mischraums 5 mittels des ringförmigen Verschlussstücks 15 durch Klemmung festgelegt, wobei sich an gegenüberliegenden Enden dieser beiden Teile jeweils nutartige Vertiefungen zur Aufnahme des verdickten Randes der Membrane 6 befinden.

Ebenfalls zwischen dem Verschlussstück 15 und der Mischraumbegrenzung anordenbare Rast- oder Schnappmittel sind nicht näher dargestellt. Das in dem Mischraum 5 befindliche Ende des stabförmigen Elements 3 erstreckt sich geradlinig in den sich nach oben konisch erweiternden Mischraum 5. Mit seinem Endbereich greift es schräg von unten in den Zwischenraum zwischen zwei Flügeln des unteren Teils des Rotors 2a des Dispergierwerkzeugs 2 ein, liegt an einem der Flügel an und versetzt den Rotor 2a durch die eigene Kreisbewegung in Rotation.

Das rotierende Element 2a des Dispergierwerkzeugs 2 rotiert dabei um seine Drehachse und ist an seinem oberen Teil, also dem Antrieb 4 abgewandten Ende mit Schneiden 12 ausgestattet. Die Rotation findet in einem koaxial zu dem rotierenden Teil angeordneten, statischen Kranz 2b statt, der ebenfalls mit Schneiden versehen ist und auf dem der obere Teil des rotierenden Teils 2a wiederum aufgelagert und mit dem unteren Teil durch die zentrale Achse drehfest verbunden ist. Dieser Kranz 2b ist mit dem rotierenden Teil 2a zusammen als Dispergierwerkzeug 2 an einem Randabsatz 11 innerhalb des Mischraums 5 lösbar aufgelagert, so dass das Werkzeug 2 insgesamt oder teilweise auswechselbar ist. Um einer durch die Drehdynamik des rotierenden Teils 2a verursachten Bewegung des Kranzes 2b in Richtung des Deckels 8 entgegenzuwirken kann es zweckmäßig sein, den Kranz 2b zusätzlich in weiterer geeigneter, hier nicht dargestellter Weise, beispielsweise durch Klemmung, festzulegen. An der den Mischraum begrenzenden achsparallelen Wandung 7 sind strömungsbrechende Einrichtungen 10 vorgesehen, die mit einem Bereich des Dispergierwerkzeugs 2 in Eingriff stehen. Hierzu sind an dem Kranz 2b entsprechende, achsparallel verlaufende Nuten 14 vorgesehen, die der Festlegung des Kranzes 2b entgegen der Drehbewegung dienen. Den oberen Abschluss des Dispergierwerkzeugs 2 bildet der mittels eines Gewindes angebrachte Deckel 8, welcher mit einer durchstechbaren Membrane 13 versehen ist.

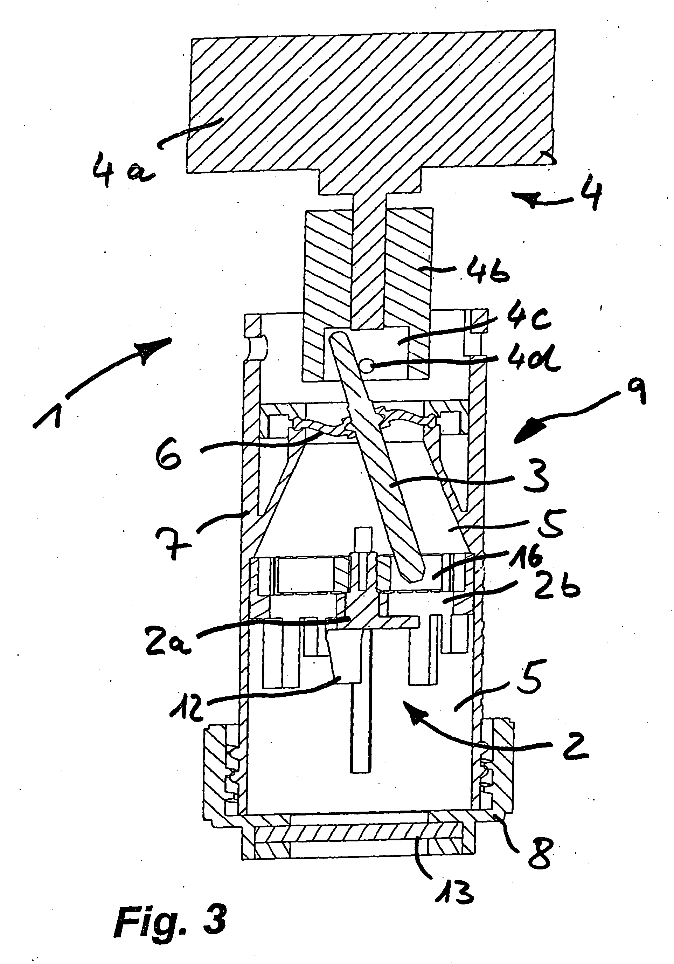

Die Fig.3 zeigt eine Ausführungsform der Dispergiervorrichtung 1, welche in wesentlichen Teilen derjenigen aus der Fig.2 entspricht, allerdings bei ebenso vertikaler Stellung auf dem Deckel 8 steht, während der Antrieb 4 der Vorrichtung 1 von oben zugeführt wird. Die Mitnahme des stabförmigen Elements 3 erfolgt erneut über einen senkrecht zur Drehachse des Antriebs 4 angeordneten Stift 4d und das stabförmige Element greift unter Auslenkung der Membrane 6 innerhalb des Mischraums 5 in diesem Fall schräg von oben nach unten in die dafür vorgesehene Ausnehmung des ihr zugewandten Teils des rotierenden Elements 2a des Dispergierwerkzeugs 2 ein, wobei das mit den Schneiden 12 versehene, drehfest verbundene obere Teil des Rotors 2a mitgenommen wird.

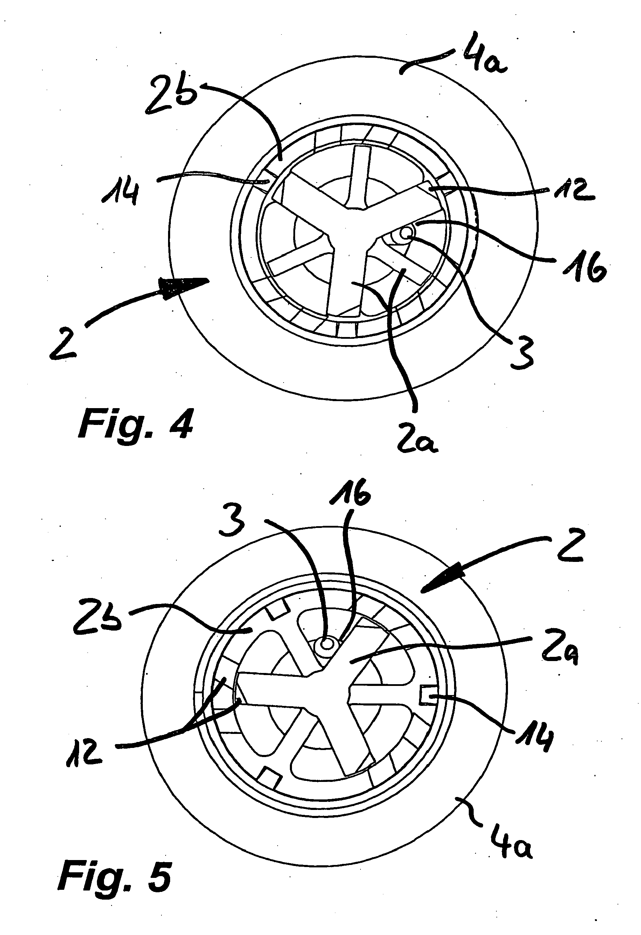

Das statische Element 2b des Dispergierwerkzeugs 2, also der Kranz 2b ist gegen eine vertikale Verschiebung entlang der Drehachse des Drehachse des Rotors 2a in geeigneter Weise mit der Wandung 7 des Mischraums 5 verklemmt. Der Deckel 8 mit der daran angeordneten durchstechbaren Membrane 13, welche eine stirnseitige Zugangsöffnung des Deckels 8 überdeckt und verschließt, bildet in diesem Fall den unteren Abschluss der Dispergiervorrichtung 1 und gleichzeitig deren Standfläche. Die Fig. 4 und 5 zeigen stirnseitige Ansichten der Dispergiervorrichtung 1 bei abgenommenem Deckel 8 von oben mit zwei verschiedenen Positionen des rotierenden Teils 2a innerhalb des statischen Teils 2b des Dispergierwerkzeugs 2 unter Eingriff des an der Membrane 6 gelagerten stabförmigen Elements 3 in die zwischen zwei Flügeln des dem Antrieb zugewandten Teils des rotierbaren Elements 2a befindliche Aussparung 16.

Die Darstellung der Fig.4 zeigt dabei, wie das stabförmige Element 3 an einem Flügel des ihm zugewandten unteren Teils des rotierenden Elements 2a bei Drehung für den Betrachter im Uhrzeigersinn angreift, diesen unteren Teil durch Mitnahme des Flügels in Rotation versetzt, wobei der untere Teil durch die drehfeste Verbindung mit dem oberen Teil des rotierbaren Elements 2a wiederum diese mitnimmt und in Rotation versetzt. Der obere und untere Teil des rotierbaren Elements 2a sind jeweils dreiflügelig ausgebildet. In der Ansicht der Fig.4 überdecken die drei Flügel des oberen Teils gerade die ebenfalls drei speichenartig verlaufenden Streben des statischen Teils, also des Kranzes 2b, auf welchem der rotierbare Teil 2a aufgelagert ist.

In der Fig.5, in welcher eine Drehung für den Betrachter entgegen dem Uhrzeigersinn stattfindet, werden die Flügel des unteren Teils des rotierbaren Elements 2a durch die Streben des statischen Teils 2b verdeckt, wobei die Flügel der beiden Teile des rotierbaren Elements 2a nicht notwendigerweise immer dieselbe Relativposition zueinander einnehmen müssen.

Die vorstehend beschriebene Erfindung betrifft demnach also eine Dispergiervorrichtung 1 mit einem hermetisch abgeschlossenen Mischraum 5, einem in diesem Mischraum 5 um eine zentrale Achse antreibbaren Dispergierwerkzeug 2 mit einem stabförmigen Element 3 zur Kraftübertragung eines Antriebs 4 auf dieses Werkzeug 2 und mit einem außerhalb des Mischraums 5 befindlichen derartigen Antrieb 4.

Um mit einer derartigen Dispergiervorrichtung 1 eine gute Dispergierleistung zu garantieren und gleichzeitig einen Austritt von Mischgut im Bereich des Antriebes auszuschließen ist es an der Vorrichtung 1 vorgesehen, dass das stabförmige Element 3 am Eintritt in den Mischraum 5 mit einer Membrane 6 verbunden ist, welche Teil einer Wandung 7 des Mischraums 5 ist, und das stabförmige Element 3 durch den Antrieb 4 in eine taumelnde Bewegung versetzbar ist, so dass dessen im Innern des Mischraums 5 befindliches Ende eine kreisende Bewegung ausführt und dass das Werkzeug 2 einen äußeren, feststehenden Kranz 2b mit Zähnen und/oder Schneiden 12 oder dergleichen und ein demgegenüber koaxial angeordnetes, rotierbares Element 2a ebenfalls mit Zähnen und/oder Schneiden 12 oder dergleichen aufweist, wobei das in dem Mischraum 5 befindliche Ende des stabförmigen Elements 3 an dem Dispergierwerkzeug 2 exzentrisch zu dessen Rotationsachse angreift und das stabförmige Element 3 in eine Aussparung 16 des rotierbaren Elements 2a in Gebrauchsstellung eingreift.

## Patentansprüche

1. Dispergiervorrichtung (1) mit einem hermetisch abgeschlossenen Mischraum (5), einem in diesem Mischraum (5) um eine zentrale Achse antreibbaren Dispergierwerkzeug (2) mit einem stabförmigen Element (3) zur Kraftübertragung eines Antriebs (4) auf dieses Werkzeug (2) und mit einem außerhalb des Mischraums (5) befindlichen derartigen Antrieb (4), wobei das stabförmige Element (3) am Eintritt in den Mischraum (5) mit einer Membrane (6) verbunden ist, welche Teil einer Wandung (7) des Mischraums (5) ist, und das stabförmige Element (3) durch den Antrieb (4) in eine taumelnde Bewegung versetzbar ist, so dass dessen im Innern des Mischraums (5) befindliches Ende eine kreisende Bewegung ausführt, **dadurch gekennzeichnet, dass** das Werkzeugs (2) einen äußeren, feststehenden Kranz (2b) mit Zähnen und/oder Schneiden (12) oder dergleichen und ein demgegenüber koaxial angeordnetes rotierbares Element (2a) ebenfalls mit Zähnen und/oder Schneiden (12) oder dergleichen aufweist, wobei das in dem Mischraum (5) befindliche Ende des stabförmigen Elements (3) an dem Dispergierwerkzeug (2) exzentrisch zu dessen Rotationsachse angreift und das stabförmige Element (3) in eine Aussparung (16) des rotierbaren Elements (2a) in Gebrauchsstellung eingreift.

2. Dispergiervorrichtung nach Anspruch 1, **dadurch gekennzeichnet, dass** das stabförmige Element (3) lose in die Aussparung (16) des rotierbaren Elements (2a) eingreift.

3. Dispergiervorrichtung nach Anspruch 1 oder 2, **dadurch gekennzeichnet, dass** die Membrane (6) das zu ihren beiden Seiten angeordnete stabförmige Element (3) trägt.

4. Dispergiervorrichtung nach einem der Ansprüche 1 bis 3, **dadurch gekennzeichnet, dass** das stabförmige Element (3) mit seinem dem Antrieb (4) zugewandten Ende lose in einen exzentrischen Bereich des rotierenden Teils des Antriebs (4) eingreift.

5. Dispergiervorrichtung nach Anspruch 4, **dadurch gekennzeichnet, dass** der Antrieb (4) einen Stift (4d) aufweist, welcher um seine mit der Antriebsachse koaxiale Querachse rotiert und an welchem das antriebsseitige Ende des stabförmigen Elements (3) anliegt.

6. Dispergiervorrichtung nach einem der vorhergehenden Ansprüche, **dadurch gekennzeichnet, dass** das stabförmige Element (3) mit der Membrane (6) einstückig ausgebildet ist.

7. Dispergiervorrichtung nach einem der vorhergehenden Ansprüche, **dadurch gekennzeichnet, dass** das stabförmige Element (3) und die Membrane (6) durch chemische Reaktion ihrer Werkstoffe verbunden sind.

8. Dispergiervorrichtung nach einem der vorhergehenden Ansprüche, **dadurch gekennzeichnet, dass** das stabförmige Element (3) mit der Membrane (6) durch eine Klebe- und/oder Flanschverbindung, eine Schweißverbindung oder eine Klemmverbindung verbunden ist.

9. Dispergiervorrichtung nach einem der vorhergehenden Ansprüche, **dadurch gekennzeichnet, dass** das stabförmige Element (3) mehrteilig, vorzugsweise jeweils einteilig zu beiden Seiten der Membrane (6) ausgebildet ist.

10. Dispergiervorrichtung nach einem der vorhergehenden Ansprüche, **dadurch gekennzeichnet, dass** das stabförmige Element (3) geradlinig ausgebildet ist.

11. Dispergiervorrichtung nach einem der vorhergehenden Ansprüche, **dadurch gekennzeichnet, dass** das dem Werkzeug (2) zugewandte Ende des stabförmigen Elements (3) mit Spiel in eine hierfür vorgesehene Öffnung des Werkzeugs (2) eingreift.

12. Dispergiervorrichtung nach einem der vorhergehenden Ansprüche, **dadurch gekennzeichnet, dass** die Drehachse des Werkzeugs (2) vertikal angeordnet ist und das stabförmige Element (3) schräg von unten nach oben oder von oben nach unten in die Aussparung (16) des Werkzeugs (2) eingreift.

13. Dispergiervorrichtung nach einem der vorhergehenden Ansprüche, **dadurch gekennzeichnet, dass** das Werkzeug (2) an mindestens einem Randabsatz (11) innerhalb des Mischraums (5) lösbar aufgelagert ist.

14. Dispergiervorrichtung nach einem der vorhergehenden Ansprüche, **dadurch gekennzeichnet, dass** der äußere, feststehende Kranz (2b) des Werkzeugs (2) durch Befestigung, Klemmung, Klebung oder Formschluss an der Innenseite der Wandung (7) des Mischraums (5) dreh- und verschiebungsfest gehalten ist.

15. Dispergiervorrichtung nach einem der vorhergehenden Ansprüche, **dadurch gekennzeichnet, dass** an dem Mischraum (5) ein lösbarer Deckel (8) vorgesehen ist.

16. Dispergiervorrichtung nach einem der vorhergehenden Ansprüche, **dadurch gekennzeichnet, dass** in einer der Wandungen (7), welche insbesondere im Deckel (8) des Mischraums vorgesehen ist, eine durchstechbare Membrane (13) angeordnet ist.

17. Dispergiervorrichtung nach einem der vorhergehenden Ansprüche, **dadurch gekennzeichnet, dass** die das stabförmige Element (3) tragende Membrane (6) als durchstechbare Membrane vorgesehen ist.

18. Dispergiervorrichtung nach einem der vorhergehenden Ansprüche, **dadurch gekennzeichnet, dass** das rotierbare Element (2a) des Werkzeugs (2) aus mindestens zwei voneinander lösbaren Teilen ausgebildet ist, welche in Gebrauchsstellung drehfest verbunden sind.

19. Dispergiervorrichtung nach einem der vorhergehenden Ansprüche, **dadurch gekennzeichnet, dass** an der achsparallelen Wandung (7) zumindest bereichsweise Vorsprünge, Rippen oder dergleichen strömungsbrechende Einrichtungen (10) vorgesehen sind.

20. Dispergiervorrichtung nach Anspruch 16, **dadurch gekennzeichnet, dass** die strömungsbrechenden Einrichtungen (10) mit mindestens einem Bereich des Werkzeugs (2) in Eingriff stehen.

21. Dispergierwerkzeug nach einem der vorhergehenden Ansprüche, **dadurch gekennzeichnet, dass** dessen Körper (9) und/oder das Werkzeug (2) und/oder der Deckel (8) und/oder das stabförmige Element (3) und/oder die Membrane (6) als Einmalartikel, insbesondere aus einem Kunststoffmaterial, ausgebildet sind.

## Claims

1. Dispersing apparatus (1) having a hermetically sealed mixing chamber (5), a dispersing tool (2) that is drivable about a central spindle in this mixing chamber (5), having a rod-shaped element (3) for transferring the power of a drive (4) to this tool (2), and with a drive (4) of this kind located outside the mixing chamber (5), the rod-shaped element (3) being attached to a membrane (6) at the entrance to the mixing chamber (5), said membrane (6) being part of a wall (7) of the mixing chamber (5), and the rod-shaped element (3) being adapted to be set wobbling by the drive (4), so that the end thereof located inside the mixing chamber (5) performs a circling movement, **characterised in that** the tool (2) has an outer fixed rim (2b) with teeth and/or cutters (12) or the like and a rotatable element (2a) arranged coaxially therewith, also having teeth and/or cutters (12) or the like, the end of the rod-shaped element (3) located in the mixing chamber (5) acting on the dispersing tool (2), eccentrically with respect to the rotation axis thereof, and the rod-shaped element (3) engaging in a recess (16) in the rotatable element (2a) in the position of use.

2. Dispersing apparatus according to claim 1, **characterised in that** the rod-shaped element (3) engages loosely in the recess (16) of the rotatable element (2a),

3. Dispersing apparatus according to claim 1 or 2, **characterised in that** the membrane (6) carries the rod-shaped element (3) arranged on both sides thereof.

4. Dispersing apparatus according to one of claims 1 to 3, **characterised in that** the rod-shaped element (3) engages loosely, with its end facing the drive (4), in an eccentric region of the rotating part of the drive (4).

5. Dispersing apparatus according to claim 4, **characterised in that** the drive (4) has a pin (4d) which rotates about its transverse axis coaxial with the drive spindle and on which the drive end of the rod-shaped element (3) abuts.

6. Dispersing apparatus according to one of the preceding claims, **characterised in that** the rod-shaped element (3) is made in one piece with the membrane (6).

7. Dispersing apparatus according to one of the preceding claims, **characterised in that** the rod-shaped element (3) and the membrane (6) are connected by chemical reaction of their materials.

8. Dispersing apparatus according to one of the preceding claims, **characterised in that** the rod-shaped element (3) is connected to the membrane (6) by an adhesive and/or flanged connection, a welded joint or a clamping connection.

9. Dispersing apparatus according to one of the preceding claims, **characterised in that** the rod-shaped element (3) is constructed in several parts, preferably with one part on each side of the membrane (6).

10. Dispersing apparatus according to one of the preceding claims, **characterised in that** the rod-shaped element (3) is of rectilinear construction.

11. Dispersing apparatus according to one of the preceding claims, **characterised in that** the end of the rod-shaped element (3) facing the tool (2) engages with play in an opening provided for this purpose in the tool (2).

12. Dispersing apparatus according to one of the preceding claims, **characterised in that** the rotation axis of the tool (2) is arranged vertically and the rod-shaped element (3) engages In the recess (16) in the tool (2) diagonally upwards from below or downwards from above.

13. Dispersing apparatus according to one of the preceding claims, **characterised in that** the tool (2) is releasably mounted on at least one edge step (11) within the mixing chamber (5).

14. Dispersing apparatus according to one of the preceding claims, **characterised in that** the outer fixed rim (2b) of the tool (2) is held non-rotatably and immovably by fixing, clamping, adhesive bonding or interlocking engagement on the inside of the wall (7) of the mixing chamber (5).

15. Dispersing apparatus according to one of the preceding claims, **characterised in that** a releasable cover (8) is provided on the mixing chamber (5).

16. Dispersing apparatus according to one of the preceding claims, **characterised in that** a pierceable membrane (13) is arranged in one of the walls (7) that is provided in particular in the cover (8) of the mixing chamber.

17. Dispersing apparatus according to one of the preceding claims, **characterised in that** the membrane (6) carrying the rod-shaped element (3) is provided as a pierceable membrane.

18. Dispersing apparatus according to one of the preceding claim, **characterised in that** the rotatable element (2a) of the tool (2) is formed from at least two parts that can be detached from one another which are non-rotatably connected in the position of use.

19. Dispersing apparatus according to one of the preceding claims, **characterised in that** projections, ribs or similar flow-breaking devices (10) are provided at least in parts on the axially parallel wall (7).

20. Dispersing device according to claim 16, **characterised in that** the flow-breaking devices (10) engage with at least one region of the tool (2).

21. Dispersing tool according to one of the preceding claims, **characterised in that** its body (9) and/or the tool (2) and/or the cover (8) and/or the rod-shaped element (3) and/or the membrane (6) are constructed as single-use items, particularly made of plastics.

## Revendications

1. Dispositif de dispersion (1), avec une chambre de mélange (5) hermétiquement fermée, avec un outil de dispersion (2) pouvant être entraîné autour d'un axe central dans cette chambre de mélange (5) et pourvu d'un élément (3) en forme de tige pour transmettre la force d'un entraînement (4) à cet outil (2), et avec un tel entraînement (4) se trouvant à l'extérieur de la chambre de mélange (5), sachant que l'élément (3) en forme de tige est relié, à l'entrée dans la chambre de mélange (5), à une membrane (6) qui fait partie d'une paroi (7) de la chambre de mélange (5), et que l'élément (3) en forme de tige peut effectuer sous l'action de l'entraînement (4) un mouvement de nutation, de sorte que son extrémité se trouvant à l'intérieur de la chambre de mélange (5) effectue un mouvement giratoire, **caractérisé en ce que** l'outil (2) présente une couronne extérieure fixe (2b) pourvue de dents et/ou de tranchants (12) ou analogues, et un élément rotatif (2a) disposé coaxialement à la couronne et également pourvu de dents et/ou de tranchants (12) ou analogues, sachant que l'extrémité de l'élément (3) en forme de tige qui se trouve dans la chambre de mélange (5) agit sur l'outil de dispersion (2) excentriquement par rapport à son axe de rotation, et que l'élément (3) en forme de tige s'engage en position d'utilisation dans un évidement (16) de l'élément rotatif (2a).

2. Dispositif de dispersion selon la revendication 1, **caractérisé en ce que** l'élément (3) en forme de tige s'engage librement dans l'évidement (16) de l'élément rotatif (2a).

3. Dispositif de dispersion selon la revendication 1 ou 2, **caractérisé en ce que** la membrane (6) porte l'élément (3) en forme de tige disposé sur ses deux côtés.

4. Dispositif de dispersion selon l'une des revendications 1 à 3, **caractérisé en ce que** l'élément (3) en forme de tige, par son extrémité tournée vers l'entraînement (4), s'engage librement dans une région excentrique de la partie rotative de l'entraînement (4).

5. Dispositif de dispersion selon la revendication 4, **caractérisé en ce que** l'entraînement (4) présente une broche (4d) qui tourne autour de son axe transversal coaxial à l'axe de l'entraînement, et contre laquelle s'applique l'extrémité côté entraînement de l'élément (3) en forme de tige.

6. Dispositif de dispersion selon l'une des revendications précédentes, **caractérisé en ce que** l'élément (3) en forme de tige est réalisé d'un seul tenant avec la membrane (6).

7. Dispositif de dispersion selon l'une des revendications précédentes, **caractérisé en ce que** l'élément (3) en forme de tige et la membrane (6) sont reliés par réaction chimique de leurs matériaux.

8. Dispositif de dispersion selon l'une des revendications précédentes, **caractérisé en ce que** l'élément (3) en forme de tige est relié à la membrane par un assemblage collé et/ou bridé, un assemblage soudé ou un assemblage par serrage.

9. Dispositif de dispersion selon l'une des revendications précédentes, **caractérisé en ce que** l'élément (3) en forme de tige est réalisé en plusieurs parties, de préférence en une partie respective de chaque côté de la membrane (6).

10. Dispositif de dispersion selon l'une des revendications précédentes, **caractérisé en ce que** l'élément (3) en forme de tige est réalisé rectiligne.

11. Dispositif de dispersion selon l'une des revendications précédentes, **caractérisé en ce que** l'extrémité de l'élément (3) en forme de tige qui est tournée vers l'outil (2) s'engage avec jeu dans une ouverture, prévue à cet effet, de l'outil (2).

12. Dispositif de dispersion selon l'une des revendications précédentes, **caractérisé en ce que** l'axe de rotation de l'outil (2) est disposé verticalement, et l'élément (3) en forme de tige s'engage en oblique de bas en haut ou de haut en bas dans l'évidement (16) de l'outil (2).

13. Dispositif de dispersion selon l'une des revendications précédentes, **caractérisé en ce que** l'outil (2) est monté de manière amovible sur au moins un gradin de bord (11) à l'intérieur de la chambre de mélange (5).

14. Dispositif de dispersion selon l'une des revendications précédentes, **caractérisé en ce que** la couronne extérieure fixe (2b) de l'outil (2) est maintenue fixement en rotation et en translation, par fixation, serrage, collage ou engagement positif, sur le côté intérieur de la paroi (7) de la chambre de mélange (5).

15. Dispositif de dispersion selon l'une des revendications précédentes, **caractérisé en ce qu'**un couvercle amovible (8) est prévu sur la chambre de mélange (5).

16. Dispositif de dispersion selon l'une des revendications précédentes, **caractérisé en ce qu'**une membrane transperçable (13) est disposée dans une des parois (7), qui est notamment prévue dans le couvercle (8) de la chambre de mélange.

17. Dispositif de dispersion selon l'une des revendications précédentes, **caractérisé en ce que** la membrane (6) qui porte l'élément (3) en forme de tige est prévue sous forme de membrane transperçable.

18. Dispositif de dispersion selon l'une des revendications précédentes, **caractérisé en ce que** l'élément rotatif (2a) de l'outil (2) est constitué d'au moins deux parties pouvant être séparées l'une de l'autre, qui sont reliées en solidarité de rotation dans la position d'utilisation.

19. Dispositif de dispersion selon l'une des revendications précédentes, **caractérisé en ce que** des saillies, nervures ou organes analogues (10) brisant le flux sont prévus au moins sectoriellement sur la paroi (7) parallèle à l'axe.

20. Dispositif de dispersion selon la revendication 16, **caractérisé en ce que** les organes (10) brisant le flux sont en prise avec au moins une région de l'outil (2).

21. Dispositif de dispersion selon l'une des revendications précédentes, **caractérisé en ce que** son corps (9) et/ou l'outil (2) et/ou le couvercle (8) et/ou l'élément (3) en forme de tige et/ou la membrane sont réalisés sous la forme d'articles à usage unique, en particulier en un matériau synthétique.
